(19) Europäisches Patentamt
European Patent Office
Office européen des brevets

(11) **EP 4 436 101 A1**

(12) **DEMANDE DE BREVET EUROPEEN**

(43) Date de publication:
**25.09.2024 Bulletin 2024/39**

(21) Numéro de dépôt: **24165215.5**

(22) Date de dépôt: **21.03.2024**

(51) Classification Internationale des Brevets (IPC):
**H04L 9/30** (2006.01)        **G06F 7/58** (2006.01)
**H04L 9/00** (2022.01)        **H04L 9/06** (2006.01)
**G06F 7/72** (2006.01)

(52) Classification Coopérative des Brevets (CPC):
**G06F 7/586; G06F 7/72; H04L 9/004; H04L 9/0662;**
**H04L 9/3033; H04L 9/3093;** G06F 2207/7204;
H04L 2209/805

(84) Etats contractants désignés:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Etats d'extension désignés:
**BA**
Etats de validation désignés:
**GE KH MA MD TN**

(30) Priorité: **24.03.2023 FR 2302830**

(71) Demandeur: **STMicroelectronics International**
**N.V.**
**1228 Plan-les-Ouates, Geneva (CH)**

(72) Inventeurs:
• **PEETERS, Michael**
**1320 Tourinnes.la-Grosse (BE)**
• **BLANC, Pierre-Alexandre**
**1140 Evere (BE)**

(74) Mandataire: **Cabinet Beaumont**
**4, Place Robert Schuman**
**B.P. 1529**
**38025 Grenoble Cedex 1 (FR)**

(54) **VERIFICATION D'UNE DONNEE**

(57) La présente description concerne un procédé de vérification d'une première donnée égale à la somme, module la dimension d'un espace comprenant ladite première donnée, de N deuxièmes données indépendantes de la première donnée, N étant un entier, comprenant une étape de vérification (404) d'une première égalité (Bj) parmi les N deuxièmes égalités données par la formule mathématique suivante :

$$LCG(k) = \left( j * LCG(Mk) + \sum_{i=1}^{N} LCG(Xi) \right) mod(m)$$

dans laquelle :
- LCG( ) représente l'image d'une donnée par une fonction de génération congruentielle linéaire ;
- Xi représente l'une desdites au moins deux deuxièmes données, i variant de 1 à N ;
- N représente le nombre desdites au moins deux deuxièmes données ;
- mod( ) représente l'opérande module ;
- m représente le module de ladite fonction ;
- j est un entier variant de 0 à N-1 ; et
- dans laquelle Mk représente l'image de ladite dimension par ladite fonction.

EP 4 436 101 A1

Fig 4

**Description**

Domaine technique

La présente description concerne de façon générale le traitement de données sensibles et/ou secrètes, et, plus particulièrement, la sécurité du traitement de telles données. La présente description se rapporte plus à la vérification et à la détection d'erreur d'une telle donnée, comme une clé de chiffrement et/ou de déchiffrement.

Technique antérieure

Différentes techniques de sécurisation de données secrètes et/ou sensibles sont utilisées de nos jours. Le chiffrement de données est l'une d'entre elles, et consiste en l'application d'un ou plusieurs algorithmes de cryptographie à des données. Beaucoup d'algorithmes de cryptographie utilisent des clés chiffrement et/ou de déchiffrement.
Avant d'utiliser une clé de chiffrement et/ou de déchiffrement, il est commun de vérifier si la clé de chiffrement stockée en mémoire est correcte, c'est-à-dire ne présente pas d'erreur.
Il serait souhaitable de pouvoir améliorer au moins en partie certains aspects des procédés de vérification et/ou de détection d'erreurs.

Résumé de l'invention

Il existe un besoin pour une sécurisation de données sensibles et/ou secrètes plus efficace.
Il existe un besoin pour une sécurisation de clé de chiffrement et/ou de déchiffrement plus efficace.
Un mode de réalisation pallie tout ou partie des inconvénients des procédés de vérification et/ou de détection d'erreurs d'une donnée.
Un mode de réalisation prévoit un procédé de vérification et/ou de détection d'erreurs d'une donnée plus sécurisé.
Un mode de réalisation prévoit un procédé de vérification et/ou de détection d'erreurs d'une donnée ne rendant pas ladite donnée accessible.
Un mode de réalisation prévoit un procédé de vérification et/ou de détection d'erreurs d'une donnée présentant une décomposition additive.
Un mode de réalisation prévoit un procédé de vérification et/ou de détection d'erreurs d'une donnée plus rapide d'exécution.
Un mode de réalisation prévoit un procédé de vérification d'une première donnée égale à la somme, module la dimension d'un espace comprenant ladite première donnée, de N deuxièmes données indépendantes de la première donnée, N étant un entier, comprenant une étape de vérification d'une première égalité parmi les N deuxièmes égalités données par la formule mathématique suivante :

$$LCG(k) = \left( j * LCG(Mk) + \sum_{i=1}^{N} LCG(Xi) \right) mod(m)$$

dans laquelle :

- LCG( ) représente l'image d'une donnée par une fonction de génération congruentielle linéaire ;
- Xi représente l'une desdites au moins deux deuxièmes données, i variant de 1 à N ;
- N représente le nombre desdites au moins deux deuxièmes données ;
- mod( ) représente l'opérande module ;
- m représente le module de ladite fonction ;
- j est un entier variant de 0 à N-1 ; et
- dans laquelle Mk représente l'image de ladite dimension par ladite fonction

Un autre mode de réalisation prévoit un dispositif électronique adapté à mettre en oeuvre un procédé de vérification d'une première donnée égale à la somme, module la dimension d'un espace comprenant ladite première donnée, de N deuxièmes données indépendantes de la première donnée, N étant un entier, comprenant une étape de vérification d'une première égalité parmi les N deuxièmes égalités données par la formule mathématique suivante :

$$LCG(k) = \left( j * LCG(Mk) + \sum_{i=1}^{N} LCG(Xi) \right) mod(m)$$

dans laquelle :

- LCG( ) représente l'image d'une donnée par une fonction de génération congruentielle linéaire ;
- Xi représente l'une desdites au moins deux deuxièmes données, i variant de 1 à N ;
- N représente le nombre desdites au moins deux deuxièmes données ;
- mod( ) représente l'opérande module ;
- m représente le module de ladite fonction ;
- j est un entier variant de 0 à N-1 ; et
- dans laquelle Mk représente l'image de ladite dimension par ladite fonction.

Selon un mode de réalisation, la première donnée n'est pas stockée en mémoire, l'image de la première donnée par la fonction est stockée en mémoire, et lesdites N deuxièmes données sont stockées en mémoire.

Selon un mode de réalisation, au moins une desdites N deuxièmes données est obtenue de façon aléatoire.

Selon un mode de réalisation, ladite dimension est un nombre premier.

Selon un mode de réalisation, la fonction de génération congruentielle linéaire est définie par la formule mathématique suivante :

$$LCG : Z \rightarrow LCG(Z) = (a * Z) \, mod(m)$$

dans laquelle :

- Z est une donnée ;
- a est le multiplicateur de ladite première fonction ; et
- * représente l'opération de multiplication.

Selon un mode de réalisation, pour calculer l'image d'une variable par la fonction, les étapes successives suivantes sont mises en oeuvre :

- décomposition de ladite variable en un polynôme ;
- application de ladite fonction audit polynôme.

Selon un mode de réalisation, l'image d'un radical dudit polynôme par ladite fonction a déjà été calculée précédemment.

Selon un mode de réalisation, l'entier N est supérieur ou égal à deux.

Selon un mode de réalisation, la première donnée est une clé de chiffrement et/ou de déchiffrement.

Selon un mode de réalisation, ladite première donnée est une donnée secrète pouvant être utilisée dans différents types d'algorithme de cryptographie comme les algorithmes de cryptographie sur courbes elliptiques, le chiffrement RSA, les algorithmes de signature comme ceux connus sous la dénomination commerciale CRYSTALS-Dilithium, ou les algorithmes d'encapsulation de clé connus sous la dénomination commerciale CRYSTALS-Kyber.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, très schématiquement et sous forme de blocs, un exemple de dispositif électronique adapté à mettre en oeuvre les modes de réalisation décrits en relation avec les figures 2 à 4 ;

la figure 2 représente, très schématiquement et sous forme de blocs, un exemple de décomposition arithmétique d'une donnée ;

la figure 3 représente, très schématiquement et sous forme de blocs, une fonction de génération congruentielle linéaire ;

la figure 4 représente un schéma bloc illustrant un mode de mise en oeuvre d'un procédé de vérification d'une clé de chiffrement et/ou de déchiffrement ; et

la figure 5 représente un schéma bloc illustrant une mode de mise en oeuvre d'un procédé d'utilisation d'une clé de chiffrement et/ou de déchiffrement.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les modes de réalisation décrits ci-après se rapportent à la vérification et/ou la détection d'erreur d'une donnée, par exemple, avant son utilisation ou son stockage en mémoire. Il s'agit plus précisément de la vérification et/ou la détection d'erreur d'une donnée sensible et/ou secrète, comme une clé de chiffrement et/ou de déchiffrement.

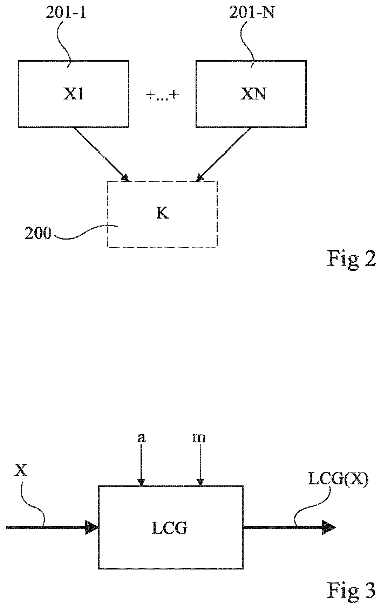

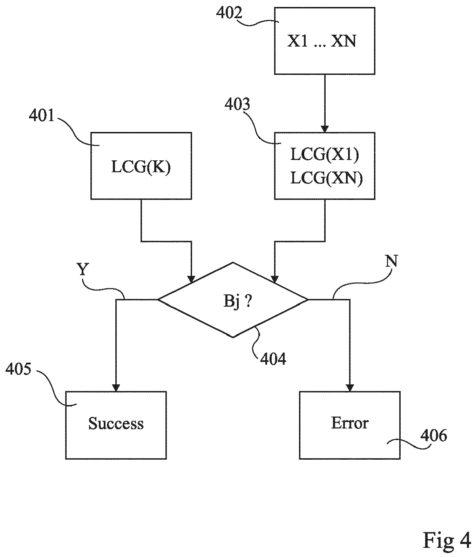

Les modes de réalisation décrits ci-après concernent, plus particulièrement, un procédé de contrôle de redondance cyclique, ou procédé de vérification, dans lequel la donnée qui est vérifiée n'est jamais rendue accessible. Pour cela, le procédé de vérification utilise une décomposition en plusieurs données de cette donnée et une fonction de génération congruentielle linéaire (LCG). Le type de décomposition utilisée ici est une décomposition additive. Ceci est décrit en détails en relation avec la figure 2. De plus, une description détaillée d'une fonction de génération congruentielle linéaire est réalisée en relation avec la figure 3. Le procédé de vérification en lui-même est décrit en relation avec la figure 4.

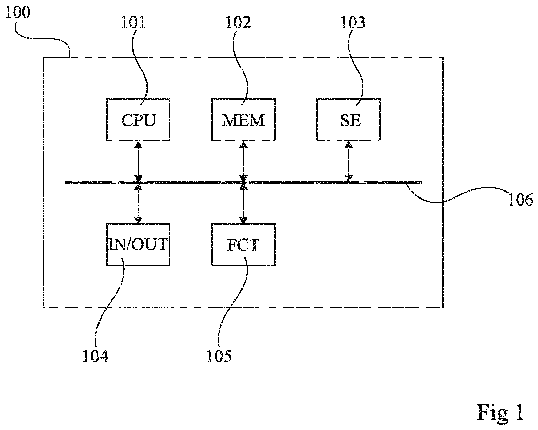

La figure 1 est un schéma bloc représentant, très schématiquement, une architecture d'un exemple d'un dispositif électronique 100 adapté à exécuter le mode de mise en oeuvre du procédé de contrôle de redondance cyclique, ou procédé de vérification, d'une donnée décrit ci-après.

Le dispositif électronique 100 comprend un processeur 101 (CPU) adapté à mettre en oeuvre différents traitements de données stockées dans des mémoires et/ou fournies par d'autres circuits du dispositif 100.

Le dispositif électronique 100 comprend, en outre, différents types de mémoires 102 (MEM), parmi lesquelles, par exemple, une mémoire non volatile, une mémoire volatile 103, et/ou une mémoire morte 104. Chaque mémoire 102 est adaptée à stocker différents types de données.

Le dispositif électronique 100 comprend, en outre, par exemple, un élément sécurisé 103 (SE) adapté à traiter des données sensibles et/ou secrètes. L'élément sécurisé 103 peut comprendre son ou ses propres processeurs, son ou ses propres mémoires, etc.

On appelle, dans la suite de la description, données sensibles et données secrètes des données dont le contenu n'est pas destiné à être public, et donc dont l'accès est restreint à certaines personnes et/ou circuits particuliers. Une clé de chiffrement et/ou de déchiffrement est considérée comme étant une donnée sensible et/ou secrète puisqu'une telle clé permet d'encoder des données sensibles et/ou secrètes, et/ou de décoder des données chiffrées.

Le dispositif électronique 100 peut comprendre, en outre, des circuits d'interface 104 (IO/OUT) adaptés à envoyer et/ou à recevoir des données provenant de l'extérieur du dispositif 100. Les circuits d'interface 104 peuvent être, en outre adaptés à mettre en oeuvre un affichage de données, par exemple, un écran d'affichage.

Le dispositif électronique 100 comprend, en outre, différents circuits 105 (FCT) adaptés à réaliser différentes fonctions. A titre d'exemple, les circuits 105 peuvent comprendre des circuits de mesures, des circuits de conversion de données, etc.

Le dispositif électronique 100 comprend, en outre, un ou plusieurs bus de données 106 adaptés à transférer des données entre ses différents composants.

La figure 2 illustre, très schématiquement et sous forme de blocs, un exemple de décomposition additive d'une donnée 200 (k).

La donnée 200, appelée donnée k dans la suite de la description, est une donnée faisant partie d'un espace de dimension Mk. Selon un mode de réalisation préféré, la dimension Mk est un chiffre premier. La donnée k, peut être, par exemple, une donnée sensible et/ou secrète adaptée à être utilisée par un dispositif du type du dispositif 100 décrit en relation avec la figure 1. Selon un mode de réalisation, la donnée k est une clé de chiffrement et/ou de déchiffrement. Selon un mode de réalisation particulier, la donnée k est une clé de chiffrement et/ou de déchiffrement, et plus précisément une clé de cryptographie sur courbe elliptique, l'entier Mk représente le champ de la courbe elliptique grâce à laquelle est obtenue la donnée k.

La donnée k est, par exemple, obtenue par un générateur de nombres aléatoires que comporte le dispositif 100, par exemple constitué par une des fonctions des circuits 105. Selon un autre exemple, la donnée k est générée par le processeur 101 ou par l'élément sécurisé 103.

Selon un mode de réalisation, la donnée k n'est pas stockée de façon classique dans une mémoire 102 du dispositif électronique 100, mais est décomposée en N données 201-1 (X1), ..., 201-N (XN) qui sont, elles, stockées dans une ou plusieurs mémoires 102 du dispositif électronique 100. Ce type de décomposition est appelée décomposition additive, puisque la somme, module Mk, des N données 201-1 à 201-N est égale à la donnée k. Selon un mode de réalisation, N est un entier supérieur ou égal à un. Selon un mode de réalisation préféré, N est un entier supérieur ou égal à deux.

Autrement dit, la donnée k est donnée par la formule mathématique A suivante :

$$k = \left( \sum_{i=1}^{N} Xi \right) \mathrm{mod(Mk)}$$

dans laquelle :

- les données Xi représentent les données 201-1, ..., à 201-N ; et
- mod( ) représente l'opérateur exprimant la congruence, aussi appelé opérateur module.

Ainsi selon un premier exemple, si N est égal à deux, alors :

$$k = X1 + X2$$

ou

$$k = X1 + X2 - Mk$$

Ainsi selon un deuxième exemple, si N est égal à trois, alors :

$$k = X1 + X2 + X3$$

ou

$$k = X1 + X2 + X3 - Mk$$

Ou

$$k = X1 + X2 + X3 - 2 * Mk$$

Selon un mode de réalisation, les données 201-1 à 201-N, appelées ci-après données X1 à XN, sont toutes indépendantes de la donnée k. Dit autrement, les données X1 à XN ne sont reliées à la donnée k que par la formule mathématique A donnée précédemment, c'est-à-dire la somme des données X1 à XN.

Selon un exemple, la décomposition de la donnée k est obtenue en utilisant une fonction de génération de données aléatoires. N-1 données X1 à XN-1 sont, par exemple, générées aléatoirement, et la dernière donnée XN est obtenue en appliquant la formule A.

Il existe une multitude de décompositions additives possible pour une donnée. Il est donc possible de changer de données de décomposition, par exemple si les données X1, ..., XN sont devenues accessibles. Il suffit, par exemple, de générer N-1 nouvelles données aléatoires et de déterminer la dernière en appliquant la formule A.

La figure 3 illustre, très schématiquement et sous forme de blocs, un mode de mise en oeuvre d'une fonction 300 (LGC).

La fonction 300 est une fonction de génération congruentielle linéaire, ou générateur congruentiel linéaire 300, adaptée à recevoir, en entrée, une donnée X et à fournir, en sortie, une donnée LCG(X) dont l'expression est dépendante de deux paramètres a et m. Le paramètre a est appelé multiplicateur de la fonction 300. Le paramètre m est appelé module de la fonction 300. Selon un exemple, les paramètres a et m sont des entiers. Selon un exemple les paramètres a et m sont des entiers différents de zéro, et l'entier m est supérieur ou égal à deux. La fonction LCG est, par exemple mise en oeuvre par le processeur 101, l'élément sécurisé 103 ou l'une des fonctions des circuits 105.

La donnée LCG(X) est donnée par la formule mathématique suivante :

$$LCG(X) = (a * X)\,mod(m)$$

dans laquelle * représente l'opérateur de multiplication.

Une fonction du type de la fonction 300 est généralement utilisée dans des générateurs de nombres aléatoires. La personne du métier saura choisir des valeurs appropriées des paramètres a et m de façon à optimiser les caractéristiques de la fonction 300. Des exemples de valeurs optimisées de ces paramètres sont donnés dans l'article intitulé "Tables of linear congruential generators of different sizes and good lattice structure" de Pierre L'Ecuyer, publié en Janvier 1999 dans le magazine Mathematics of Computation.

Selon un mode de réalisation, pour minimiser les temps de calcul et les ressources d'un dispositif exécutant la fonction 300, il est possible d'utiliser une décomposition polynomiale d'une donnée pour calculer plus rapidement son image par la fonction 300.

Selon un exemple, on considère une donnée D, ou variable D, appartenant à un espace de dimension L, et sa décomposition en un polynôme de rang P, P étant un entier, de radical r, et de coefficients d0, d1, ..., dP-1. La donnée D est donc donnée par la formule mathématique suivante :

$$D = \left( \sum_{j=0}^{P-1} dj * r^j \right) mod()$$

L'image LCG(D) de la donnée D par la fonction 300 est donnée par la formule mathématique suivante :

$$LCG(D) = \left( \sum_{j=0}^{P-1} dj * LCG(r^j) \right) mod(L)$$

Pour optimiser le temps de calcul de l'image LCG(D) il suffit d'enregistrer, au préalable les valeurs des images LCG(r$^j$), j étant un entier variant de 0 à P-1.

La figure 4 est un schéma bloc représentant un mode de mise en oeuvre d'un procédé de contrôle de redondance cyclique, ou procédé de vérification de la donnée k définie en relation avec la figure 2 et utilisant la fonction 300 décrit en relation avec la figure 3.

Le procédé de vérification de la donnée k est un procédé de contrôle de redondance cyclique permettant de détecter des erreurs de transmission, de combinaison et/ou d'application d'algorithme.

Ce procédé de vérification est adapté à être mis en oeuvre par le dispositif 100 décrit en relation avec la figure 1, ou par un dispositif du type du dispositif 100.

A une étape d'initialisation 401 (LCG(k)), une donnée LCG(k) représentant l'image de la donnée k par la fonction 300 est obtenue par le processeur 101, l'élément sécurisé 103, ou par l'une des fonctions mises en oeuvre par les circuits 105. Selon un mode de réalisation, l'image LCG(k) est calculée et stockée dans une mémoire du dispositif 100, mais la donnée k elle-même n'est pas stockée en mémoire. Cette étape peut être mise en oeuvre dès la génération de la donnée k. Un exemple de technique de calcul de la donnée LCG(k) est décrit en relation avec la figure 3.

A une autre étape d'initialisation 402 (X1, ..., XN), la décomposition de la donnée k en les données X1 à XN est obtenue, par exemple, en utilisant la technique décrite en relation avec la figure 2, en utilisation le processeur 101, l'élément sécurisé 103, ou l'une des fonctions mises en oeuvre par les circuits 105. Selon un mode de réalisation, les données X1 à XN sont toutes stockées dans une ou plusieurs mémoires 102 du dispositif 100. Cette étape peut, également, être mise en oeuvre dès la génération de la donnée k.

A une étape 403 (LCG(X1), ..., LCG(XN)), postérieure à l'étape 402, des données LCG(X1) à LCG(XN) représentant les images des données X1 à XN par la fonction 300 sont obtenues par le processeur 101, par l'élément sécurisé 103, ou par l'une des fonctions mises en oeuvre par les circuits 105. Selon un mode de réalisation, les images LCG(X1) à LCG(XN) sont calculées et stockées dans une mémoire du dispositif 100. Cette étape peut être mise en oeuvre dès la génération de la donnée k, comme l'étape 402.

A une étape 404 (Bj), postérieure aux étapes 401 et 403, N deuxièmes égalités Bj, j étant un entier variant de 0 à N-1, sont vérifiées. Chaque égalité Bj est donnée par la formule mathématique suivante :

$$(Bj) : LCG(k) = \left( j * LCG(Mk) + \sum_{i=1}^{N} LCG(Xi) \right) mod(m)$$

Pour effectuer ces vérifications, les données obtenues aux étapes 401 à 403 sont utilisées.

Si une des égalités Bj est vérifiée (sortie Y) alors l'étape suivante est une étape 405 (Success). Sinon (sortie N), l'étape suivante est une étape 406 (Error).

En pratique, l'étape 404 peut être mise en oeuvre de manière itérative, en incrémentant l'entier j de un, par le processeur 101, par l'élément sécurisé 103, ou par l'une des fonctions mises en oeuvre par les circuits 105. Plus particulièrement, l'étape 404 commence avec la vérification de l'égalité B0, si celle n'est pas vérifiée, alors l'égalité B1 est vérifiée et ainsi de suite.

A l'étape 405, l'une des égalités Bj a été vérifiée, il est donc considéré que les données X1 à XN sont correctes et permettent d'obtenir la donnée k. Les données X1 à XN peuvent être utilisées par le processeur 101, par l'élément sécurisé 103, ou par l'une des fonctions mises en oeuvre par les circuits 105, à la place de la donnée k dans toutes les opérations linéaire par rapport à la somme module Mk.

A l'étape 406, aucune des égalités Bj n'a été vérifiée. La décomposition de la donnée k en les données X1 à XN présente donc des erreurs, et les données X1 à XN ne peuvent donc être utilisées pour obtenir la donnée k.

Un avantage de ce procédé de vérification est qu'il est plus rapide à mettre en oeuvre qu'un procédé de contrôle de redondance cyclique classique.

Un autre avantage de ce procédé est que le risque de rendre la donnée k accessible est bien moindre qu'avec un procédé de redondance cyclique classique. En effet, la donnée k n'est pas stockée en mémoire, et les données X1 à XN sont toutes indépendantes de la donnée k. Il faudrait donc avoir accès à toutes les données X1 à XN pour obtenir la donnée k.

Encore un autre avantage de ce procédé est qu'il peut être utilisé dans des dispositifs mettant en oeuvre différents types d'algorithme de cryptographie comme les algorithmes de cryptographie sur courbes elliptiques, le chiffrement RSA, les algorithmes de signature comme ceux connus sous la dénomination commerciale CRYSTALS-Dilithium, ou les algorithmes d'encapsulation de clé connus sous la dénomination commerciale CRYSTALS-Kyber. Ainsi, la donnée K peut être une donnée secrète utilisée dans n'importe lequel des algorithmes cités précédemment.

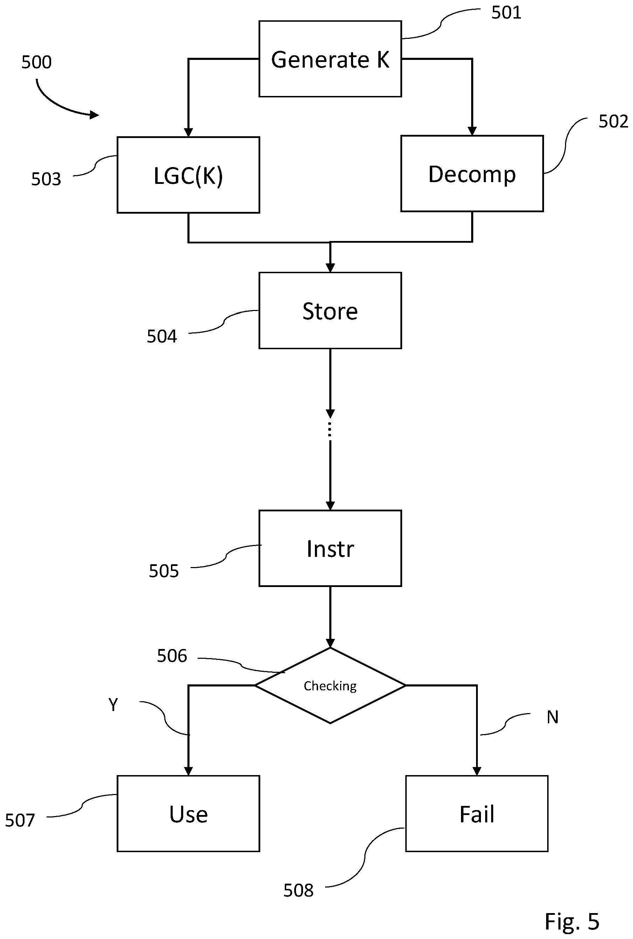

La figure 5 est un schéma bloc illustrant un procédé d'utilisation de la donnée k décrite en relation avec la figure 2. Ce procédé est mis en oeuvre par un dispositif électronique D du type du dispositif électronique 100 décrit en relation avec la figure 1. Plus particulièrement, le dispositif électronique D comprend au moins un processeur P et une mémoire M. Le processeur P peut être n'importe quel type de processeur décrit en relation avec la figure 1, et la mémoire M peut être n'importe quel type de mémoire décrite en relation avec la figure 1.

A une étape initiale 501 (Generate k), mise en oeuvre par le processeur P, la donnée k est générée. Selon un mode de réalisation, la donnée k est une donnée sensible et/ou secrète, telle qu'une clé de chiffrement et/ou de déchiffrement comme décrit en relation avec la figure 2, qui ne peut pas être stockée en mémoire.

A une étape 502 (Decomp), successive à l'étape 501, mise en oeuvre par le processeur P, une décomposition arithmétiques de la donnée k est préparée. Dit autrement, les N données X1, ..., XN indépendantes, décrites en relation avec la figure 2, sont générées comme décrit en relation avec la figure 2.

A une étape 503 (CRC(k)), successive à l'étape 501, mise en oeuvre par le processeur P, une image LCG(k) de la donnée k par une fonction de de génération congruentielle linéaire, comme la fonction 300 décrite en relation avec la figure 3, est calculée en utilisant la donnée k.

Selon une variante de réalisation, l'étape 503 est successive à l'étape 502, et l'image LCG(k) est calculée en utilisation les données X1, ..., XN, et pas directement la donnée k.

A une étape 504 (Store), successives aux étapes 502 et 503, mise en oeuvre par le processeur P et la mémoire M, les données X1, ..., XN et l'image LCG(k) sont toutes stockées dans la mémoire M. Toutes les copies existantes de la donnée k sont supprimées pour des raisons de sécurité.

A une étape 505 (Instr), successive à l'étape 504, mise en oeuvre par le processeur P, le processeur P reçoit une instruction faisant requête de l'utilisation de la donnée k. Si la donnée k est une clé de chiffrement et/ou de déchiffrement, l'instruction peut être une instruction de chiffrement et/ou de déchiffrement. Pour mettre en oeuvre cette instruction, le processeur P n'a seulement accès qu'aux données X1, ..., XN, et n'a pas accès à la donnée k.

A une étape 506 (Checking), successive à l'étape 505, mise en oeuvre par le processeur P, le processeur P met en oeuvre le procédé de vérification décrit en relation avec la figure 4, pour vérifier si toutes les données X1, ..., XN ont été correctement retrouvées dans la mémoire M, et si aucune des données X1, ..., XN n'ont été modifiées. Si le procédé de vérification décrit en relation avec la figure 4 est un succès (sortie Y) l'étape suivante est une étape 507 (Use). Sinon l'étape suivante est une étape 508 (Fail).

A l'étape 507, mise en oeuvre par le processeur P, le procédé de la figure 4 a prouvé que toutes les données X1, ..., XN sont correctes, le processeur P peut donc mettre en oeuvre l'instruction reçue à l'étape 505 en utilisant les données X1, ..., XN.

A l'étape 508, mise en oeuvre par le processeur P, le procédé de la figure 4 a prouvé qu'au moins une des données X1, ..., XN est incorrecte, le processeur P ne peut donc pas mettre en oeuvre l'instruction reçue à l'étape 505.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

**Revendications**

1. Procédé de vérification d'une première donnée (k) égale à la somme, module la dimension (Mk) d'un espace comprenant ladite première donnée (k), de N deuxièmes données (X1, ..., XN) indépendantes de la première donnée (k), N étant un entier, comprenant une étape de vérification (404) d'une première égalité (Bj) parmi les N deuxièmes égalités données par la formule mathématique suivante :

$$LCG(k) = \left( j * LCG(Mk) + \sum_{i=1}^{N} LCG(Xi) \right) mod(m)$$

dans laquelle :

- LCG( ) représente l'image d'une donnée par une fonction (300) de génération congruentielle linéaire ;
- Xi représente l'une desdites au moins deux deuxièmes données, i variant de 1 à N ;
- N représente le nombre desdites au moins deux deuxièmes données ;
- mod( ) représente l'opérande module ;
- m représente le module de ladite fonction (300) ;
- j est un entier variant de 0 à N-1 ; et
- dans laquelle Mk représente l'image de ladite dimension (Mk) par ladite fonction (300).

2. Dispositif électronique adapté à mettre en oeuvre un procédé de vérification d'une première donnée (k) égale à la somme, module la dimension (Mk) d'un espace comprenant ladite première donnée (k), de N deuxièmes données (X1, ..., XN) indépendantes de la première donnée (k), ), N étant un entier, comprenant une étape de vérification (404) d'une première égalité (Bj) parmi les N deuxièmes égalités données par la formule mathématique suivante :

$$LCG(k) = \left( j * LCG(Mk) + \sum_{i=1}^{N} LCG(Xi) \right) mod(m)$$

dans laquelle :

- LCG( ) représente l'image d'une donnée par une fonction (300) de génération congruentielle linéaire ;
- Xi représente l'une desdites au moins deux deuxièmes données, i variant de 1 à N ;
- N représente le nombre desdites au moins deux deuxièmes données ;
- mod( ) représente l'opérande module ;
- m représente le module de ladite fonction (300) ;
- j est un entier variant de 0 à N-1 ; et
- dans laquelle Mk représente l'image de ladite dimension (Mk) par ladite fonction (300).

**3.** Procédé selon la revendication 1, ou dispositif selon la revendication 2, dans lequel la première donnée (k) n'est pas stockée en mémoire, l'image de la première donnée (k) par la fonction (300) est stockée en mémoire, et lesdites N deuxièmes données (X1, ..., XN) sont stockées en mémoire.

**4.** Procédé selon l'une quelconque des revendications 1 ou 3, ou dispositif selon l'une quelconque des revendications 2 ou 3, dans lequel au moins une desdites N deuxièmes données (X1, ..., XN) est obtenue de façon aléatoire.

**5.** Procédé selon l'une quelconque des revendications 1, 3 ou 4, ou dispositif selon l'une quelconque des revendications 2 à 4, dans lequel ladite dimension (Mk) est un nombre premier.

**6.** Procédé selon l'une quelconque des revendications 1, 3 à 5, ou dispositif selon l'une quelconque des revendications 2 à 5, dans lequel la fonction (300) de génération congruentielle linéaire est définie par la formule mathématique suivante :

$$LCG : Z \rightarrow LCG(Z) = (a * Z) \, mod(m)$$

dans laquelle :

- Z est une donnée ;
- a est le multiplicateur de ladite première fonction (300) ; et
- * représente l'opération de multiplication.

**7.** Procédé selon l'une quelconque des revendications 1, 3 à 6, ou dispositif selon l'une quelconque des revendications 2 à 6, dans lequel pour calculer l'image d'une variable par la fonction (300), les étapes successives suivantes sont mises en oeuvre :

- décomposition de ladite variable en un polynôme ;
- application de ladite fonction (300) audit polynôme.

**8.** Procédé ou dispositif selon la revendication 7, dans lequel l'image d'un radical (r) dudit polynôme par ladite fonction (300) a déjà été calculée précédemment.

**9.** Procédé selon l'une quelconque des revendications 1, 3 à 8, ou dispositif selon l'une quelconque des revendications 2 à 8, dans lequel l'entier N est supérieur ou égal à deux.

**10.** Procédé selon l'une quelconque des revendications 1, 3 à 9, ou dispositif selon l'une quelconque des revendications 2 à 9, dans lequel la première donnée (k) est une clé de chiffrement et/ou de déchiffrement.

**11.** Procédé selon l'une quelconque des revendications 1, 3 à 10, ou dispositif selon l'une quelconque des revendications 2 à 10, dans lequel ladite première donnée (k) est une donnée secrète pouvant être utilisée dans différents types d'algorithme de cryptographie comme les algorithmes de cryptographie sur courbes elliptiques, le chiffrement RSA, les algorithmes de signature comme ceux connus sous la dénomination commerciale CRYSTALS-Dilithium, ou les algorithmes d'encapsulation de clé connus sous la dénomination commerciale CRYSTALS-Kyber.

Fig 1

201-1

201-N

X1   +...+   XN

K

200

Fig 2

a   m

X

LCG

LCG(X)

Fig 3

402 — X1 ... XN

401 — LCG(K)

403 — LCG(X1)
LCG(XN)

Y   Bj ?   N
404

405 — Success

Error — 406

Fig 4

Fig. 5

Europäisches
Patentamt

European
Patent Office

Office européen
des brevets

# RAPPORT DE RECHERCHE EUROPEENNE

**Numéro de la demande**

EP 24 16 5215

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | KUMAR PANDA AMIT ET AL: "A Coupled Variable Input LCG Method and its VLSI Architecture for Pseudorandom Bit Generation", IEEE TRANSACTIONS ON INSTRUMENTATION AND MEASUREMENT, IEEE, USA, vol. 69, no. 4, 4 avril 2019 (2019-04-04), pages 1011-1019, XP011777123, ISSN: 0018-9456, DOI: 10.1109/TIM.2019.2909248 [extrait le 2020-03-09] | 1-4,6 | INV. H04L9/30 G06F7/58 H04L9/00 H04L9/06 G06F7/72 |
| Y | * alinéa [0III] * ----- | 5,7-11 | |
| Y | KATHARINA KREUZER: "Verification of the (1-[delta])-Correctness Proof of CRYSTALS-KYBER with Number Theoretic Transform", IACR, INTERNATIONAL ASSOCIATION FOR CRYPTOLOGIC RESEARCH , vol. 20230109:094644 9 janvier 2023 (2023-01-09), pages 1-16, XP061076387, Extrait de l'Internet: URL:https://eprint.iacr.org/archive/2023/027/1673257604.pdf [extrait le 2023-01-09] * alinéa [0002] - alinéa [0005] * ----- | 5,7-11 | DOMAINES TECHNIQUES RECHERCHES (IPC) H04L G06F |

-/--

Le présent rapport a été établi pour toutes les revendications

| Lieu de la recherche | Date d'achèvement de la recherche | Examinateur |
|---|---|---|
| Munich | 25 juin 2024 | Di Felice, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Europäisches Patentamt**
**European Patent Office**
**Office européen des brevets**

## RAPPORT DE RECHERCHE EUROPEENNE

Numéro de la demande

EP 24 16 5215

| Catégorie | Citation du document avec indication, en cas de besoin, des parties pertinentes | Revendication concernée | CLASSEMENT DE LA DEMANDE (IPC) |
|---|---|---|---|
| **DOCUMENTS CONSIDERES COMME PERTINENTS** | | | |
| A | PRASANNA RAVI ET AL: "Fiddling the Twiddle Constants - Fault Injection Analysis of the Number Theoretic Transform", IACR, INTERNATIONAL ASSOCIATION FOR CRYPTOLOGIC RESEARCH , vol. 20220623:100515 23 juin 2022 (2022-06-23), pages 1-24, XP061074688, Extrait de l'Internet: URL:https://eprint.iacr.org/archive/2022/824/1655978715.pdf [extrait le 2022-06-23] * alinéa [0002] - alinéa [0005] * ----- | 1-11 | |
| A | EP 3 698 513 B1 (KONINKLIJKE PHILIPS NV [NL]) 8 décembre 2021 (2021-12-08) * alinéa [0095] - alinéa [0235] * ----- | 1-11 | |
| A | PISTONO MAXIME ET AL: "Cryptosystem Conversion, Packing and Matrix Processing of Homomorphically Encrypted Data: Application to IOT Devices", IEEE ACCESS, IEEE, USA, vol. 9, 11 février 2021 (2021-02-11), pages 28302-28316, XP011839073, DOI: 10.1109/ACCESS.2021.3058849 * alinéa [00II] - alinéa [0III] * ----- -/-- | 1-11 | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Munich | 25 juin 2024 | Di Felice, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

**RAPPORT DE RECHERCHE EUROPEENNE**

Numéro de la demande

EP 24 16 5215

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | BELLAFQIRA REDA REDA BELLAFQIRA@IMT-ATLANTIQUE FR ET AL: "Proxy Re-Encryption Based on Homomorphic Encryption", PROCEEDINGS OF THE 2022 INTERNATIONAL CONFERENCE ON MANAGEMENT OF DATA, ACMPUB27, NEW YORK, NY, USA, 4 décembre 2017 (2017-12-04), pages 154-161, XP058833482, DOI: 10.1145/3134600.3134616 ISBN: 978-1-4503-9572-4 * alinéa [0002] - alinéa [0003] * ----- | 1-11 | |
| T | L'ECUYER PIERRE ET AL: "Tables of linear congruential generators of different sizes and good lattice structure", MATHEMATICS OF COMPUTATION , vol. 68, no. 225 1 janvier 1999 (1999-01-01), pages 249-260, XP093105237, US ISSN: 0025-5718, DOI: 10.1090/S0025-5718-99-00996-5 Extrait de l'Internet: URL:https://www.ams.org/journals/mcom/1999-68-225/S0025-5718-99-00996-5/S0025-5718-99-00996-5.pdf [extrait le 2023-11-10] * alinéa [0002] * ----- | 1-11 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 25 juin 2024 | Di Felice, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**EP 4 436 101 A1**

## ANNEXE AU RAPPORT DE RECHERCHE EUROPEENNE
## RELATIF A LA DEMANDE DE BREVET EUROPEEN NO.

EP 24 16 5215

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-06-2024

| Document brevet cité au rapport de recherche | Date de publication | Membre(s) de la famille de brevet(s) | Date de publication |
|---|---|---|---|
| EP 3698513 B1 | 08-12-2021 | BR 112020007373 A2 | 29-09-2020 |
| | | CN 111492615 A | 04-08-2020 |
| | | EP 3474484 A1 | 24-04-2019 |
| | | EP 3698513 A1 | 26-08-2020 |
| | | JP 7208987 B2 | 19-01-2023 |
| | | JP 2020537191 A | 17-12-2020 |
| | | US 2020304305 A1 | 24-09-2020 |
| | | WO 2019076737 A1 | 25-04-2019 |

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **PIERRE L'ECUYER.** *Tables of linear congruential generators of different sizes and good lattice structure,* Janvier 1999